Europäisches Patentamt

(19) European Patent Office

Office européen des brevets

(11) Veröffentlichungsnummer: **0 159 611**
**B1**

(12) **EUROPÄISCHE PATENTSCHRIFT**

(45) Veröffentlichungstag der Patentschrift:
02.06.89

(51) Int. Cl.⁴: **C 10 J 3/00,** C 10 J 3/57,
F 01 K 21/00

(21) Anmeldenummer: **85104240.8**

(22) Anmeldetag: **09.04.85**

(54) **Kraftwerk mit einem Hochtemperaturreaktor und einer Anlage zur Herstellung von Chemierohstoffen.**

(30) Priorität: **21.04.84 DE 3415223**

(43) Veröffentlichungstag der Anmeldung:
**30.10.85 Patentblatt 85/44**

(45) Bekanntmachung des Hinweises auf die Patenterteilung:
**02.06.89 Patentblatt 89/31**

(84) Benannte Vertragsstaaten:
**BE DE FR GB NL**

(56) Entgegenhaltungen:
**DE-A-1 915 248**
**DE-A-2 620 454**
**DE-A-2 837 988**
**DE-A-2 908 748**
**FR-A-2 393 052**
**GB-A-2 078 251**

**Lueger, Lexikon der Technik, 4. Aufl. Bd. 6,**
**"Lexikon der Energie technik und Kraftmaschinen,**
**Deutsche Verlags-Anstalt, Stuttgart 1965, Seiten**
**546, 547**

**Die Akte enthält technische Angaben, die nach**
**dem Eingang der Anmeldung eingereicht wurden**
**und die nicht in dieser Patentschrift enthalten sind.**

(73) Patentinhaber: **Siemens Aktiengesellschaft Berlin**
**und München, Wittelsbacherplatz 2, D-8000**
**München 2 (DE)**

(72) Erfinder: **Frewer, Hans, Dr. Dipl.- Ing.,**
**Atzelsberger Strasse 25, D-8525 Marloffstein (DE)**
Erfinder: **Müller, Rainer, Dr. Dipl.- Ing.,**
**Herdegenplatz 1, D-8520 Erlangen (DE)**
Erfinder: **Schiffers, Ulrich, Dr. Dipl.- Ing.,**
**Moritzbergstrasse 1, D-8501 Eckental (DE)**

## Beschreibung

Die Erfindung bezieht sich auf ein Kraftwerk mit einem Hochtemperaturreaktor, einem an den Hochtemperaturreaktor angeschlossenem Dampfkraftwerk und einer Anlage zur Erzeugung von Wasserstoff aus kohlenstoffhaltigem Material, mit einem Kohlevergaser zur hydrierenden Kohlenvergasung, einer dem Gasstrom das Kohlevergasers nachgeschalteten Gasreinigungsanlage, einer der Gasreinigungsanlage nachgeschalteten Tieftemperatur-Gaszerlegungsanlage und einem an die Methanleitung dieser Gaszerlegungsanlage angeschlossenen vom Wärmetransportmedium des Hochtemperaturreaktors beheizten Röhrenspaltofen zur Spaltung eines Methan-Wasserdampfgemisches und mit einer an den Abgasstrang des Röhrenspaltofens angeschlossenen, aus mindestens einem Wärmetauscher, einer Konvertierungsanlage und einer Kohlendioxydwaschanlage bestehenden Gasaufbereitungsanlage.

Die wirtschaftlichen Vorteile einer solchen Kraftwerkskonzeption, bei dem die Wärmeerzeugung eines Hochtemperaturreaktors nicht nur zur Dampferzeugung für eine Dampfkraftanlage sondern auch zum Betrieb eines Röhrenspaltofens für die Aufspaltung eines durch hydrierende Kohlevergasung gewonnenen Methan-Wasserstoffgemisches heran gezogen wird, sind bekannt. Hierbei kann die hohe Temperatur des Wärmetransportmediums eines Hochtemperaturreaktors nicht nur zur Dampferzeugung, sondern zusätzlich auch zur Erzeugung von Kohlenmonoxydgas und Wasserstoffgas genutzt werden. In Verbindung mit einem solchen Anlagenkonzept ist es auch bekannt, das Abgas eines solchermaßen beheizten Röhrenspaltofens unter Zuführung von Wasserdampf in einer Konvertierungsanlage in Wasserstoff- und Kohlendioxydgas umzuwandeln und das Kohlendioxydgas mittels einer nachgeschalteten Kohlendioxydwaschanlage aus dem Gasstrom zu entfernen. Das verbleibende Wasserstoffgas ließe sich bei einer solchen Kraftwerkskonzeption nach Abzug jener für die hydrierende Kohlevergasung benötigten rezirkulierten Wasserstoffmenge nach Belieben verwenden.

Der bei einer solchen Kraftwerkskonzeption bei der hydrierenden Kohlevergasung zurückbleibende Restkoks ließe sich jedoch wegen seines relativ hohen Schwefelgehaltes angesichts der geltenden Schwefeldioxyd-Emissionsgrenzwerte nicht mehr wirtschaftlich in Kraftwerkskesseln verbrennen. Auch die Vergasung dieses Restkokses in einem heliumbeheizten Wasserdampfvergaser würde materialtechnische und reaktionstechnische Probleme verursachen.

Der Erfindung liegt daher die Aufgabe zugrunde, einen Weg zu finden, wie der bei der hydrierenden Kohlevergasung anfallende stark schwefelhaltige Restkoks wirtschaftlich verwertet werden kann. Darüber hinaus sollte zugleich auch der thermische Wirkungsgrad des Kraftwerkes und die Ausnutzung der eingesetzten Rohstoffe in der angeschlossenen Anlage zur Erzeugung von Wasserstoffgas soweit wie möglich verbessert werden.

Die gestellte Aufgabe wird erfindungsgemäß durch die im Kennzeichen des Anspruchs 1 angegebenen Merkmale gelöst. Vorteilhafte Weiterbildungen sind in den Ansprüchen 2 bis 18 beschrieben.

Die Nachschaltung eines Eisenbadvergasers an den hydrierenden Kohlevergaser erlaubt es, den stark schwefelhaltigen Restkoks vollständig in Kohlenmonoxydgas und geringe Mengen von Wasserstoffgas umzuwandeln und dabei zugleich den im Restkoks befindlichen Schwefel durch Zusatz von Kalk vollständig in der abschöpfbaren Schlake zu binden und mit dieser abzuführen. Darüber hinaus ermöglicht es das sehr hohe Temperaturniveau eines Eisenbadvergasers - dessen im wesentlichen kohlenmonoxydhaltige Abgase mit ca. 1500° C austreten - den Röhrenspaltofen zusätzliche Wärme zur Spaltung des Methans durch Aufheizen des hierbei benötigten Mitteldruckdampfes auf Temperaturen über jene des Wärmetransportmediums des Hochtemperaturreaktors zuzuführen. Durch die Vorwärmung des sich mit dem sehr heißen Dampf vermischenden Methans kann die Wärmezufuhr durch das Wärmetransportmedium des Hochtemperaturreaktors vermindert und die erforderliche Eintrittstemperatur des Wärmetransportmediums des Hochtemperaturreaktors in den Röhrenspaltofen abgesenkt werden. Die mit sehr hohen Austrittstemperaturen des Wärmetransportmediums des Hochtemperaturreaktors verbundenen Probleme können so vermieden werden.

Durch die Hintereinanderschaltung eines Kohlevergasers zur hydrierenden Kohlevergasung und eines Eisenbadvergasers wird es möglich, diese Anlage an verschiedene Kohlearten und andere fossile Brennstoffarten, wie z. B. Steinkohle, Braunkohle, Schwerölrückstände, Ölschiefer und Ölsand anzupassen und dennoch ein der jeweils nachgeschalteten Anlage zur Erstellung von Chemierohstoffen angepaßtes stöchiometrisches Verhältnis von Wasserstoff und Kohlenmonoxyd einzuhalten. Die Zuführung dieser unterschiedlichen, kohlenstoffhaltigen Materialien kann sowohl in den Kohlevergaser, als auch als Zumischung zum Restkoks in den Eisenbadvergaser erfolgen. Dabei ist lediglich darauf zu achten, daß die Wärmebilanz im Eisenbadvergaser hinreichend positiv ist, so daß das Eisenbad nicht durch Temperaturabsenkungen einfrieren kann. Die Anpassbarkeit dieser Anlage an unterschiedliche stöchiometrische Verhältnisse von Wasserstoff und Kohlenmonoxyd kann durch die Zuschaltung einer Konvertierungsanlage mit anschließender Kohlendioxydwaschanlage an die Abgasleitung des Eisenbadvergasers stark vergrößert werden.

Eine besonders rationelle Ausnutzung der einzelnen Baugruppen sowie eine Minimierung derselben läßt sich erreichen, wenn Anlagen zur Erstellung von Chemierohstoffen mit unterschiedlichen Anforderungen an das stöchiometrische Verhältnis von Wasserstoff und Kohlenmonoxyd parallel zueinander angeschlossen werden. So könnten beispielsweise ein Stahlwerk mit seinem Bedarf an kohlenmonoxydhaltigen Reduktionsgas und eine Methanolsyntheseanlage oder Ammoniaksyntheseanlage mit ihrem verstärkten Bedarf an Wasserstoffgas angeschlossen werden. In diesem Fall braucht die dem Eisenbadvergaser nachschaltbare Konvertierungsanlage mit angeschlossener Kohlendioxydwaschanlage für nur einen Teilstrom des Abgases des Eisenbadvergasers ausgelegt zu werden oder kann sogar gänzlich entfallen.

Weitere Einzelheiten der Erfindung werden anhand eines Ausführungsbeispiels erläutert. Es zeigt:

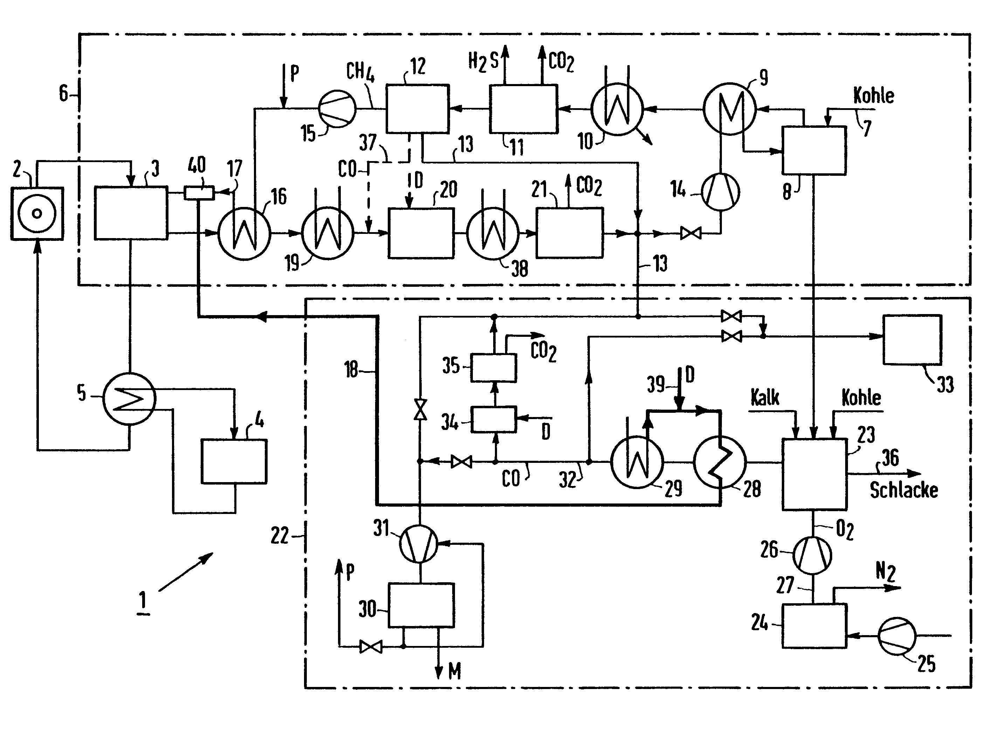

Die Figur eine schematische Darstellung des erfindungsgemäßen Kraftwerks mit einem Hochtemperaturreaktor und einer angeschlossenen Anlage zur Erzeugung von Wasserstoffgas aus fossilen Brennstoffen.

In der Figur ist das erfindungsgemäße Kraftwerk 1 schematisch dargestellt. In einem Hochtemperatur-Reaktor 2 wird ein gasförmiges Wärmetransportmedium, wie z. B. Heliumgas zunächst einem Röhrenspaltofen 3, sodann einem einer Dampfkraftanlage 4 zugeordneten Dampferzeuger 5 und anschließend wieder dem Hochtemperaturreaktor 2 zugeleitet.

In der angeschlossenen Anlage 6 zur Erzeugung von Wasserstoffgas aus fossilen Brennstoffen wird fossiler Brennstoff über eine Versorgungsleitung 7, einem Kohlevergaser 8 zugeführt und dort mit Wasserstoffgas zu einem methanreichen Gas hydriert. Das Abgas des Kohlevergasers durchströmt nacheinander einen Wärmetauscher 9, indem es seine Wärme an das im Gegenstrom in den Kohlevergaser einströmende Wasserstoffgas abgibt und eine Dampferzeugeranordnung 10, in der Mitteldruck- und/oder Niederdruckdampf erzeugt wird, durchströmt. Dieser Dampferzeugeranordnung ist eine Gasreinigungsanlage 11 nachgeschaltet, in der die nunmehr abgekühlten Abgase von Staubpartikeln aller Art befreit und Kohlendioxyd- und Schwefelverbindungen entfernt werden. An diese Gasreinigungsanlage schließt sich eine Tieftemperatur-Gaszerlegungsanlage 12 an, in der das Methan vom Wasserstoffgas und Kohlenmonoxydgas abgetrennt wird. Während der Wasserstoff und das in geringe Mengen anfallende Kohlenmonoxydgas in eine Wasserstoffversorgungsleitung 13 eingespeist werden, von der ein Teil über einen Verdichter 14 und über den vom Abgasstrom des Kohlevergasers 8 durchströmten Wärmetauscher 9 in den Kohlevergaser zurückgeleitet wird, wird die Methanfraktion über einen anderen Verdichter 15 und einem weiteren vom Abgasstrom des Röhrenspaltofens 3 durchströmten Wärmetauscher 16 in den Röhrenspaltofen 3 geleitet. In dieser, in den Röhrenspaltofen hineinführenden von Methan durchströmten Leitung 17 mündet eine von stark überhitzten Dampf durchströmte Speiseleitung 18.

Das in den Röhrenspaltofen 3 einströmende, aufgeheizte Methan-Wasserdampfgemisch wird in dem vom Wärmetransportmedium des Hochtemperaturreaktors 2 beheizten Röhrenspaltofen 3 zu Wasserstoff und Kohlenmonoxyd aufgespalten. Diese ca. 800°C heißen Abgase des Röhrenspaltofens durchströmen den vorgenannten Wärmetauscher 16, in dem das in den Röhrenspaltofen einströmende Methan aufgeheizt wird und werden in einem diesem gasseitig nachgeschalteten Dampferzeuger 19, in dem Mitteldruckdampf erzeugt wird, weiter abgekühlt. Diesen letztgenannten Wärmetauscher 16 und Dampferzeuger 19 ist abgasseitig eine Konvertierungsanlage 20 nachgeschaltet, in der die inzwischen auf ca. 400°C abgekühlten kohlenmonoxyd- und wasserdampfhaltigen Abgase des Röhrenspaltofens 3 in Wasserstoff und Kohlendioxyd umgewandelt werden. Nach dem Abkühlen des konvertierten Gases in einem weiteren Wärmetauscher 38 wird das Kohlendioxyd in einer nachgeschalteten kohlendioxyd-Waschanlage 21 ausgewaschen. Ein Teil des verbleibenden Wasserstoffs wird über die Wasserstoffversorgungsleitung 13, dem Verdichter 14 und dem vom Abgas des Kohlevergasers 8 durchströmten Wärmetauscher 9 in den Kohlevergaser zur hydrierenden Kohlevergasung geleitet. Der Rest des Wasserstoffs steht anderweitiger Verwendung, im vorliegenden Fall einer Anlage 22 zur Erstellung von Chemierohstoffen zur Verfügung. Er kann dieser über die Wasserstoffversorgungsleitung 13 zugeleitet werden.

Zur Verwertung des Restkokses aus dem Kohlevergaser 8 ist letzterem ein Eisenbadvergaser 23 nachgeschaltet. Diesem können außer dem Restkoks, dem zuvor Kalk beigemischt wurde, je nach Betriebsweise zusätzlich weitere fossile Brennstoffe zugeführt werden. In den Eisenbadvergaser 23 wird außerdem Sauerstoff eingeblasen. Dieser entstammt einer dem Eisenbadvergaser vorgeschalteten Luftzerlegungsanlage 24, die ihrerseits wiederum an einen Luftverdichter 25 angeschlossen ist. Zur Anpassung an das Druckniveau des Eisenbadvergasers ist ein weiterer Verdichter 26 in die Sauerstoffleitung 27 der Luftzerlegungsanlage 24 eingebaut. Die etwa 1500°C heißen, im wesentlichen kohlenmonoxydhaltigen, schwefelfreien Abgase des Eisenbadvergasers 23 durchströmen nacheinander zwei dem Eisenbadvergaser nachgeschaltete Wärmetauscher 28, 29, die im Gegenstrom von Mitteldruckdampf durchströmt werden und in denen dieser auf über 1000°C aufgeheizt wird. In dem dem Eisenbadvergaser 23 unmittelbar nachgeschalteten Wärmetauscher 28 wird auch noch zusätzlicher, in der Dampferzeugeranordnung 10 und dem Dampferzeuger 19 erzeugter Mitteldruckdampf, der bei 39 eingeleitet wird, überhitzt. Das diesen beiden Wärmetauschern 28, 29 entströmende abgekühlte, im wesentlichen kohlenmonoxydhaltige Abgas des Eisenbadvergasers 23 wird zusammen mit einem Teil des in der Wasserstoffversorgungsleitung 13 frei verfügbaren Wasserstoffs aus der Tieftemperaturzerlegungsanlage 12 und aus der dem Röhrenspaltofen 3 nach geschalteten Konvertierungsanlage einem einer Methanolsyntheseanlage 30 vorgeschalteten Verdichter 31 zugeführt. Das in der Methanolsyntheseanlage 30 erzeugte Methanol M kann gespeichert (nicht dargestellt) und als Rohstoff vertrieben werden. Das in der Methanolsyntheseanlage nicht vollständig umgesetzte, kohlenmonoxyd- und wasserstoffhaltige Syntheseabgas wird überwiegend zwecks Rezirkulation in den Verdichter 31 zurückgeleitet und zu einem kleinen Teil als sogenanntes Purgegas P direkt dem in den Röhrenspaltofen 3 einströmenden Methan zugemischt.

Ein Teil des den Wärmetauschern 28, 29 über die Gasleitung 32 entströmenden, im wesentlichen kohlenmonoxydhaltigen Gases wird zweckmäßigerweise als Reduktionsgas verwertet und beispielsweise einem Stahlwerk 33 zugeleitet. Hierzu kann es mit Wasserstoff aus der Wasserstoffleitung 13 angereichert werden. An die am Eisenbadvergaser 23 angeschlossene Gasleitung 32 ist im Ausführungsbeispiel eine weitere Konvertierungsanlage 34 mit nachgeschalteter Kohlendioxydwaschanlage 35 angeschlossen. Durch diese, separat mit Wasserdampf D gespeisten Konvertierungsanlage 34 kann bei Bedarf ein Teil des Kohlenmonoxyds in Wasserstoff umgewandelt werden, falls bedarfsabhängig zu wenig Wasserstoff im Verhältnis zu Kohlenmonoxyd zur Verfügung steht.

In dem durch den hydrierenden Kohlevergaser 8, die Gasreinigungsanlage 11, der Tieftemperatur-Gaszerlegungsanlage 12, den Röhrenspaltofen 3, sowie der Konvertierungsanlage 20 bestimmten Stoffumsetzung wird die Wärme des Hochtemperaturreaktors 2 dazu benutzt, um die Ausbeute an Wasserstoffgas, bezogen auf die Menge des eingesetzten fossilen Brennstoffs zu erhöhen. Die Ausbeute an Wasserstoff je Mengeneinheit des eingesetzten fossilen Brennstoffes ist hier bedeutend größer als bei anderen bekannten Verfahren, bei denen ein Teil des fossilen Brennstoffes zur Bereitsellung der für die Wasseraufspaltung erforderlichen Energie verbraucht wird.

Der bei der hydrierenden Kohlevergasung anfallende Restkoks kann jedoch wegen seines hohen Schwefelgehaltes nicht mehr ohne weiteres in Kraftwerkskesseln verfeuert werden, weil anderenfalls die Schwefeldioxyd-Emmissionsgrenzwerte überschritten würden. Hierbei schafft der dem hydrierenden Kohlevergaser 8 nachgeschaltete Eisenbadvergaser 23 insoweit Abhilfe, als dessen Abgase bei entsprechender Beimischung von kalkhaltigen Zuschlagstoffen zum Restkoks praktisch schwefelfrei sind. Der Schwefel bleibt in der auf dem Eisenbad schwimmenden Schlake eingebunden und kann mit dieser über den Schlackenablauf 36 abgezogen werden.

Zusätzlich ermöglicht der Eisenbadvergaser 23 infolge seines hohen Temperaturniveaus auch die Verbrennung reaktionsträger kohlenstoffreicher und/oder ballastreicher fossiler Brennstoffe. So können Steinkohle, Braunkohle, Ölsand, Ölschiefer und Schwerölrückstände verwertet werden.

Die Kombination eines hydrierenden Kohlevergasers 8 eines Röhrenspaltofens 3 zur Methanaufspaltung und eines Eisenbadvergasers 23 zur Auswertung des Restkokses ergibt darüber hinaus eine erhebliche Flexibilität bei der Einstellung eines bestimmten stöchiometrischen Verhältnisses der erzeugten Gase Wasserstoff und Kohlenmonoxyd. Zum einen kann ein Mengenverhältnis von Wasserstoff und Kohlenmonoxyd von 2 : 1, wie es für die Methanolsynthese erforderlich ist, bei der Verwendung von Steinkohle ohne weiteres durch eine 45-%-ige bis 60-%-ige Ausnutzung derselben im hydrierenden Kohlevergaser 8 und anschließender Vergasung des dabei entstehenden Restkokses in den Eisenbadvergaser 23 erreicht werden. Zum anderen läßt sich dieses Mengenverhältnis von Wasserstoff zu Kohlenmonoxyd auch dadurch erreichen, daß man die hydrierende Kohlevergasung je nach eingesetztem fossilen Brennstoff noch weiter fortsetzt und den dann in geringeren Mengen im Eisenbadvergaser 23 verfügbaren Restkoks durch andere fossile Brennstoffe, etwa Braunkohle, Öl, Schiefer, Ölsand, oder Schwerölrückstände ergänzt.

Beim Einsatz heizwertarmer fossiler Brennstoffe im Eisenbadvergaser 23 ist lediglich darauf zu achten, daß der Gesamtumsatz hinreichend exotherm bleibt, um das Eisenbad flüssig zu halten. Darüber hinaus ist eine etwaige Überproduktion von Kohlenmonoxyd im Eisenbadvergaser bei diesem Kraftwerk 1 durch die Konvertierung eines Teils des erzeugten Kohlemonoxydgases in dem an der Gasleitung 32 angeschlossenen Konvertierung 34 mit nachgschalteter Kohlendioxydwaschanlage 35 ohne weiteres auszugleichen. Auch durch die Verwendung eines Teils des im Eisenbadvergaser 23 entstehenden Kohlenmonoxyds - das geringfügig mit Wasserstoffgas angereichert werden kann, - als Reduktionsgas für ein Stahlwerk läßt sich das Angebot an Kohlenmonoxydgas für die nachgeschaltete Methanolsyntheseanlage 30 zugunsten von Wasserstoffgas verschieben. Auch kann das Angebot an Wasserstoffgas bei dieser Anlage dadurch zu Lasten von Kohlenmonoxyd vergrößert werden, daß bei der Tieftemperaturzerlegungsanlage 12 Wasserstoff und Kohlenmonoxyd in getrennten Leitungen 13, 37 abgeführt werden und das Kohlenmonoxyd in der dem Röhrenspaltofen 3 nachgeschalteten Konvertierungsanlage 20 eingespeist wird.

Bei diesem Kraftwerk 1 ist es auch möglich, die Wärme des dem Eisenbadvergaser 23 mit 1500°C entströmendem heißen Kohlenmonoxydgases dazu zu verwenden, Mitteldruckdampf auf über 1000° aufzuheizen und dem dem Röhrenspaltofen 3 zuströmendem Methan beizumischen. Durch diesen zusätzlichen Wärmeeintrag kann die Wärmezufuhr durch das Wärmetransportmedium des Hochtemperaturreaktors 2 vermindert werden, bzw. dessen Temperatur auf ein niederes Temperaturniveau abgesenkt werden. Dadurch werden die mit sehr hohen Austrittstemperaturen des Wärmetransportmediums des Hochtemperaturreaktors verbundenen Probleme materialtechnischer und sonstiger Art vermieden. Zugleich steht so mehr Wärme dem der Dampfkraftanlage zugeordneten Dampferzeuger 5 zur Verfügung.

Bei diesem Kraftwerk könnte anstelle der Tieftemperaturzerlegungsanlage 12 auch eine Druckwechselabsorptionsanlage eingesetzt werden. Auch könnte bei zu niedrigem Restdampfgehalt des dem Röhrenspaltofen 3 entströmenden Abgases zusätzlicher Dampf in die Konvertierungsanlage 20 eingeleitet werden.

**Bezugszeichenliste**

| | |
|---|---|
| Kraftwerk | 1 |
| Hochtemperaturreaktor | 2 |
| Röhrenspaltofen | 3 |
| Dampfkraftanlage | 4 |
| Dampferzeuger | 5 |
| Anlage zur Erzeugung von Wasserstoff | 6 |
| Versorgungsleitung | 7 |
| Kohlevergaser | 8 |
| Wärmetauscher | 9 |
| Dampferzeugeranordnung | 10 |
| Gasreinigungsanlage | 11 |
| Tieftemperatur-Gaszerlegungsanlage | 12 |
| Wasserstoffversorgungsleitung | 13 |
| Verdichter | 15 |
| Wärmetauscher | 16 |
| $CH_4$-Leitung | 17 |
| Heißdampfleitung | 18 |
| Dampferzeuger | 19 |
| Konvertierungsanlage | 20 |
| $CO_2$-Waschanlage | 21 |
| Anlage zur Herstellung von Chemierohstoffen | 22 |
| Eisenbadvergaser | 23 |
| Luftzerlegungsanlage | 24 |
| Luftverdichter | 25 |
| Verdichter | 26 |
| Sauerstoffleitung | 27 |
| Wärmetauscher | 28, 29 |
| Methanolsyntheseanlage | 30 |
| Verdichter | 31 |
| Gasleitung | 32 |
| Stahlwerk | 33 |
| Konvertierungsanlage | 34 |
| Kohlendioxydwaschanlage | 35 |
| Schlackenablauf | 36 |
| Gasleitung | 37 |
| Wärmetauscher | 38 |
| Einleitung | 39 |
| Ejektor | 40 |
| Wasserdampf | D |
| Methanol | M |
| Purgegas | P |

**Patentansprüche**

1. Kraftwerk mit einem Hochtemperaturreaktor, einem an den Hochtemperaturreaktor angeschlossenen Dampfkraftwerk, einer Anlage zur Erzeugung von Wasserstoff aus kohlenstoffhaltigem Material, mit einem Kohlevergaser zur hydrierenden Kohlevergasung, einer dem Gasstrom des Kohlevergasers nachgeschalteten Gasreinigungsanlage, einer der Gasreinigungsanlage nachgeschalteten Tieftemperatur-Gaszerlegungsanlage, einem an die Methanleitung dieser Gaszerlegungsanlage angeschlossenen, vom Wärmetransportmedium des Hochtemperaturreaktors beheizten Röhrenspaltofen zur Spaltung eines Methan-Wasserdampfgemisches und mit einer an den Abgasstrang des Röhrenspaltofen angeschlossenen, aus mindestens einem Wärmetauscher, einer Konvertierungsanlage und einer Kohlendioxydwaschanlage bestehenden Gasaufbereitungsanlage, <u>dadurch gekennzeichnet,</u> daß der Restkoks des Kohlevergasers (8) einem Eisenbadvergaser (23) zugeführt und das Abgas des Eisenbadvergasers über eine Wärmetauscheranlage (28, 29) zusammen mit dem einen Teil des aus der dem Röhrenspaltofen nachgeschalteten Gasaufbereitungsanlage (20, 21) austretenden Wasserstoffgases einer Anlage zur Herstellung von Chemierohstoffen (30, 33) zugeleitet wird.

2. Kraftwerk nach Anspruch 1, <u>dadurch gekennzeichnet,</u> daß dem Eisenbadvergaser (23) ein Wärmetauscher (28, 29) für Mitteldruckdampf nachgeschaltet ist.

3. Kraftwerk nach Anspruch 2, <u>dadurch gekennzeichnet,</u> daß der aufgeheizte Dampf in den Röhrenspaltofen (3) eingespeist wird.

4. Kraftwerk nach Anspruch 2, <u>dadurch gekennzeichnet,</u> daß der Röhrenspaltofen (3) primärseitig vom Wärmetransportmedium des Hochtemperaturreaktors (2) und sekundärseitig von dem im Wärmetauscher (28, 29) erzeugten Mitteldruckdampf durchströmt wird.

5. Kraftwerk nach Anspruch 2, <u>dadurch gekennzeichnet,</u> daß der in den Wärmetauscher (28, 29) einströmende Mitteldruckdampf einen dem Druck im Röhrenspaltofen (3) übersteigenden Druck hat und dem Methan über einen druckerhöhenden Ejektor (40) beigemischt wird.

6. Kraftwerk nach Anspruch 1, <u>dadurch gekennzeichnet,</u> daß das dem Eisenbadvergaser (23) entströmende kohlenmonoxydhaltige Gas vor der Zuleitung in eine weitere Anlage zur Erstellung von Chemierohstoffen (30) durch ein aus einer Konvertierungsanlage (34) und einer Kohlendioxydwascheinrichtung (35) bestehende weitere Gasaufbereitungsanlage geleitet wird.

7. Kraftwerk nach Anspruch 1
dadurch gekennzeichnet,
daß das kohlenmonoxydhaltige Gas des Eisenbadvergasers (23) nach entsprechender Kühlung in den Wärmetauschern (28, 29) zusammen mit dem der Gasaufbereitung (20, 21) entströmendem Wasserstoffgas als Reduktionsgas einer weiteren Anlage (33) zur Herstellung von Chemierohstoffen, zugeleitet wird.

8. Kraftwerrk nach Anspruch 1
dadurch gekennzeichnet,
daß die weitere Anlage zur Herstellung von Chemierohstoffen eine Methanolsyntheseanlage (30) ist.

9. Kraftwerk nach Anspruch 1,
dadurch gekennzeichnet,
daß die weitere Anlage zur Erstellung von Chemierohstoffen ein Stahlwerk (33) ist.

10. Kraftwerk nach Anspruch 1,
dadurch gekennzeichnet,
daß die weitere Anlage zur Erstellung von Chemierohstoffen eine Ammoniaksyntheseanlage ist, der Eisenbadvergaser mit mit Sauerstoff angereicherter Luft betrieben wird, und das der Ammoniaksyntheseanlage zuzuleitende Abgas einer vollständigen Konvertierung unterzogen wird.

11. Kraftwerk nach Anspruch 1 oder 8,
dadurch gekennzeichnet,
daß der Kohlevergaser (8) zur Erlangung eines beispielsweise bei der Methanolsynthese erforderlichen stöchiometrischen Verhältnisses von Wasserstoff zu Kohlenmonoxyd von 2 : 1 mit einem verminderten Kohlenstoffvergasungsgrad, der bei Steinkohle 45 bis 60 % der eingesetzten Kohle beträgt, betreibbar ist.

12. Kraftwerk nach Anspruch 1 oder 9,
dadurch gekennzeichnet,
daß ein Teil des im Eisenbadvergasers (23) erzeugten kohlenmonoxydhaltigen Gases zusammen mit Wasserstoffgas aus der Wasserstoffversorgungsleitung der Methanolsyntheseanlage (30), der andere Teil aber dem Stahlwerk (33) zugeleitet wird.

13. Kraftwerk nach Anspruch 1 oder 8,
dadurch gekennzeichnet,
daß die im Kohlevergaser (8) eingesetzte Kohle zur Erlangung eines beispielsweise bei der Methanolsynthese benötigten stöchiometrischen Verhältnisses von Wasserstoff zu Kohlenmonoxyd von 2 : 1, dort weitgehend vergast wird und dafür dem Eisenbadvergaser (23) zusätzlich zu dem Restkoks des Kohlevergasers (8) weitere fossile Brennstoffe zusetzbar sind.

14. Kraftwerk nach Anspruch 1,
dadurch gekennzeichnet,
daß der Eisenbadvergaser (23) infolge der Zuführung von heizwertreichem Restkoks auch mit heizwertarmen Brennstoffen, wie z. B. Braunkohle, Ölschiefer, Schwerölrückstände, Ölsand usw. und deren Gemische mit ausreichend exotherme Wärmebilanz betreibbar ist.

15. Kraftwerk nach Anspruch 13,
dadurch gekennzeichnet,
daß dem Eisenbadvergaser (23) eine Trocken und/oder Vorwärmstufe für heizwertarme Brennstoffe vorgeschaltet ist.

16. Kraftwerk nach Anspruch 1,
dadurch gekennzeichnet,
daß der Eisenbadvergaser (23) an der Sauerstoffleitung (27) einer Luftzerlegungsanlage (24) angeschlossen ist.

17. Kraftwerk nach Anspruch 15,
dadurch gekennzeichnet,
daß zur Aufrechterhaltung eines Überdruckes im Eisenbadvergaser (23) ein Verdichter (26) in der Sauerstoffleitung (27) eingebaut ist.

18. Kraftwerk nach Anspruch 8,
dadurch gekennzeichnet,
daß das Purgegas (P) der Methanolsyntheseanlage (30) dem in den Röhrenspaltofen (3) strömenden Methan über eine separate Leitung beimischbar ist.

19. Kraftwerk nach Anspruch 1,
dadurch gekennzeichnet,
daß in der Tieftemperatur-Gaszerlegungsanlage (12) abgespaltenes Kohlenmonoxyd über eine separate Leitung (37) unmittelbar in die Gasaufbereitsungsanlage (20, 21) einleitbar ist.

**Claims**

1. Power station having a high-temperature reactor, a steam power station connected to the hightemperature reactor, a plant for producing hydrogen from material containing carbon, having a coal gasifier for hydrogenating coal gasification, a gas purification plant connected downstream of the gas stream of the coal gasifier, a low-temperature gas separation plant connected downstream of the gas purification plant, a tubular splitting-furnace, connected to the methane line of this gas separation plant and heated by the heat transport medium of the high temperature reactor, for the purpose of splitting a methane-steam mixture and having a gas treatment plant which is connected to the waste gas lane of the tubular splitting-furnace and comprising at least one heat exchanger, a conversion plant and a carbon dioxide washing plant, characterised in that the residual coke of the coal gasifier (8) is fed to an iron bath gasifier (23) and the waste gas of the iron bath gasifier is supplied by way of a heat exchanger plant (28, 29) together with the one portion of the hydrogen gas, emerging from the gas treatment plant (20, 21) connected downstream of the tubular splitting-furnace, to a plant for the production of raw chemical materials (30, 33).

2. Power station according to claim 1, characterised in that a heat exchanger (28 29) for medium pressure steam is connected ᴅwnstream of the iron bath gasifier (23).

3. Power station according to claim 2, characterised in that the heated steam is fed into the tubular splitting-furnace (3).

4. Power station according to claim 2, characterised in that there flows through the tubular splitting-furnace (3) on the primary side the heat transport medium of the high-temperature reactor (2) and on the secondary side the medium pressure steam produced in the heat exchanger (28, 29).

5. Power station according to claim 2, characterised in that the medium pressure steam flowing into the heat exchanger (28, 29) has a pressure which exceeds the pressure in the tubular splitting-furnace (3) and is admixed with the methane by way of a pressure-increasing ejector (40).

6. Power station according to claim 1, characterised in that the gas containing carbon monoxide flowing out from the iron bath gasifier (23) is conducted, before supply into a further plant for the preparation of raw chemical materials (30), through a further gas treatment plant which comprises a conversion plant (34) and a carbon dioxide washing device (35).

7. Power station according to claim 1, characterised in that the gas, containing carbon monoxide, of the iron bath gasifier (23) is supplied after corresponding cooling in the heat exchangers (28, 29) together with the hydrogen gas flowing out from the gas treatment (20, 21) as a reduction gas to a further plant (33) for the production of raw chemical materials.

8. Power station according to claim 1, characterised in that the further plant for the production of raw chemical materials is a methanol synthesis plant (30).

9. Power station according to claim 1, characterised in that the further plant for the preparation of raw chemical materials is a steel works (33).

10. Power station according to claim 1, characterised in that the further plant for the preparation of raw chemical materials is an ammonia synthesis plant, the iron bath gasifier is operated with air enriched with oxygen and the waste gas which is to be supplied to the ammonia synthesis plant is subjected to complete conversion.

11. Power station according to claim 1 or 8, characterised in that the coal gasifier (8) for the purpose of obtaining a stoichiometric ratio of hydrogen to carbon monoxide of 2 : 1, as necessary for example in the case of methanol synthesis, can be operated with a reduced degree of carbon gasification amounting in the case of hard coal to 45 to 60 % of the coal used.

12. Power station according to claim 1 or 9 characterised in that a portion of the gas containing carbon monoxide and produced in the iron bath gasifier (23) is supplied together with hydrogen gas from the hydrogen supply line to the methanol synthesis plant (30), the other portion, however, being supplied to the steel works (33).

13. Power station according to claim 1 or 8, characterised in that the coal used in the coal gasifier (8) for the purpose of obtaining a stoichiometric ratio of hydrogen to carbon monoxide of 2 : 1, as required for example in the case of methanol synthesis, is gasified there substantially and therefore in addition to the residual coke of the coal gasifier (8) further fossil fuels can be added to the iron bath gasifier (23).

14. Power station according to claim 1, characterised in that the iron bath gasifier (23) as a result of the supply of residual coke with high calorific value can also be operated with fuels with low calorific value, such as, for example, brown coal, oil shale, heavy oil residues, oil sand etc. and mixtures thereof with sufficiently exothermal heat balance.

15. Power station according to claim 13, characterised in that a drying and/or preheating stage for fuels with low calorific value is connected upstream of the iron bath gasifier (23).

16. Power station according to claim 1, characterised in that the iron bath gasifier (23) is connected to the oxygen line (27) of an air separation plant (24).

17. Power station according to claim 15, characterised in that in order to maintain an excess pressure in the iron bath gasifier (23) a compressor (26) is built into the oxygen line (27).

18. Power station according to claim 8, characterised in that the purge gas (P) of the methanol synthesis plant (30) can be admixed, by way of a separate line, with the methane flowing into the tubular splitting-furnace (3).

19. Power station according to claim 1, characterised in that carbon monoxide which is split off in the low temperature gas separation plant (12) can be introduced directly into the gas treatment plant (20, 21) by way of a separate line (37).

**Revendications**

1. Centrale de production d'électricité comprenant un réacteur à haute température, une centrale thermique à vapeur de production d'électricité raccordée au réacteur à haute température, une installation de production d'hydrogène à partir de matériau carboné, un gazogène à charbon pour la gazéification hydrogénante du charbon, une installation d'épuration des gaz montée en aval du courant gazeux du gazogène à charbon, une installation de fractionnement des gaz à très basse température montée en aval de l'installation d'épuration des gaz, un four tubulaire de dissociation, qui est raccordé au conduit pour le méthane de cette installation de fractionnement des gaz, qui est chauffé par le milieu de transport de la chaleur du réacteur à haute température et qui est destiné à la dissociation d'un mélange de méthane et de vapeur d'eau, et une installation de traitement des gaz, qui est reliée à la branche destinée à l'effluent gazeux du four tubulaire de dissociation et qui est constituée d'au moins un échangeur de chaleur, une installation de conversion et une installation de lavage du dioxyde de carbone, caractérisée en ce que le coke résiduel du gazogène à charbon (8) est envoyé à un gazogène à bain de fer (23) et l'effluent gazeux du gazogène à bain de fer est envoyé, en passant par une installation à échangeur de chaleur (26, 29), en même temps qu'une partie de l'hydrogène gazeux sortant de l'installation de traitement des gaz (20, 21) montée en aval du four tubulaire de dissociation, à une installation de production de matières premières chimiques (30, 33).

2. Centrale de production d'électricité suivant la revendication 1,

caractérisée en ce que,

un échangeur de chaleur (28, 29) pour de la vapeur moyenne pression est monté en aval du gazogène à bain de fer (23).

3. Centrale de production d'électricité suivant la revendication 2,

caractérisée en ce que,

la vapeur chauffée est envoyée dans le four tubulaire de dissociation (3).

4. Centrale de production d'électricité suivant la revendication 2,

caractérisée en ce que,

le four tubulaire de dissociation (3) est parcouru, du côté primaire, par le milieu de transport de la chaleur du réacteur à haute température (2) et, du côté secondaire, par la vapeur moyenne pression produite dans l'échangeur de chaleur (28, 29).

5. Centrale de production d'électricité suivant la revendication 2,

caractérisée en ce que,

la vapeur moyenne pression pénétrant dans l'échangeur de chaleur (28, 29) a une pression dépassant la pression dans le four tubulaire de dissociation (3) et est ajoutée au méthane par un éjecteur (40) augmentant la pression.

6. Centrale de production d'électricité suivant la revendication 1,

caractérisée en ce que,

le gaz contenant du monoxyde de carbone et sortant du gazogène à bain de fer (23) est envoyé, avant d'être envoyé dans une autre installation de production de matières premières chimiques (30), dans une autre installation de traitement des gaz constituée d'une installation de conversion (34) et d'une installation de lavage du dioxyde de carbone (35).

7. Centrale de production d'électricité suivant la revendication 1,

caractérisée en ce que,

le gaz contenant du monoxyde de carbone, du gazogène à bain de fer (23) est envoyé, après refroidissement adéquat, dans les échangeurs de chaleur (26, 29), en même temps que l'hydrogène gazeux sortant du traitement des gaz (20, 21), à titre de gaz réducteur, à une autre installation (33) de production de matières premières chimiques.

8. Centrale de production d'électricité suivant la revendication 1,

caractérisée en ce que,

l'autre installation de production de matières premières chimiques est une installation de synthèse de méthanol (30).

9. Centrale de production d'électricité suivant la revendication 1,

caractérisée en ce que,

l'autre installation de production de matières premières chimiques est une aciérie (33).

10. Centrale de production d'électricité suivant la revendication 1,

caractérisée en ce que,

l'autre installation de production de matières premières chimiques est une installation de synthèse de l'ammoniac le gazogène à bain de fer fonctionne avec de l'air enrichi en oxygène et l'effluent gazeux envoyé à l'installation de synthèse de l'ammoniac est soumis à une conversion complète.

11. Centrale de production d'électricité suivant la revendication 1 ou 6,

caractérisée en ce que,

le gazogène à charbon (6) peut fonctionner pour l'obtention d'un rapport stoechiométrique de l'hydrogène au monoxyde de carbone de 2 : 1 qui est nécessaire, par exemple, pour la synthèse du méthanol, avec un degré amoindri de gazéification du carbone qui, pour de la houille, représente de 45 à 60 % du charbon engagé.

12. Centrale de production d'électricité suivant la revendication 1 ou 9,

caractérisée en ce que,

une partie du gaz, contenant du monoxyde de carbone, qui est produit dans le gazogène à bain de fer (23) est envoyée, en même temps que l'hydrogène gazeux provenant du conduit d'alimentation en hydrogène, à l'installation de synthèse de méthanol (30) et l'autre partie, à l'aciérie (33).

13. Centrale de production d'électricité suivant la revendication 1 ou 8,

caractérisée en ce que,

le charbon mis en oeuvre dans le gazogène à charbon (6) y est gazéifié dans une grande mesure pour obtenir un rapport stoechiométrique de l'hydrogène au monoxyde de carbone de 2 : 1 qui est nécessaire, par exemple, pour la synthèse du méthanol, et à cet effet d'autres combustibles fossiles peuvent être ajoutés au gazogène à bain de fer (23), en plus du coke résiduel du gazogène à charbon (8).

14. Centrale de production d'électricité suivant la revendication 1,

caractérisée en ce que,

le gazogène à bain de fer (23) peut fonctionner, en raison de l'amenée de coke résiduel à grande valeur calorifique, également avec des combustibles de faible valeur calorifique, comme par exemple du lignite, des schistes bitumineux, des résidus d'huiles lourdes, du sable pétrolifère, etc., et leurs mélanges, tout en ayant un bilan calorifique suffisamment exothermique.

15. Centrale de production d'électricité suivant la revendication 13,

caractérisée en ce que,

un stade de séchage et/ou de préchauffage des combustibles de faible valeur calorifique est prévu en amont du gazogène à bain de fer (23).

16. Centrale de production d'électricité suivant la revendication 1, caractérisée en

caractérisée en ce que,

le gazogène à bain de fer (23) est relié au conduit pour l'oxygène (27) d'une installation de fractionnement de l'air (24).

17. Centrale de production d'électricité suivant la revendication 15,

caractérisée en ce que,

pour maintenir une surpression dans le gazogène à bain de fer (23), un compresseur (26) est monté dans le conduit pour l'oxygène (27).

18. Centrale de production d'électricité suivant la revendication 8,

caractérisée en ce que,

le gaz de purge (P) de l'installation de synthèse du méthanol (30) peut être mélangé par un conduit distinct au méthane passant dans le four tubulaire de dissociation (3).

19. Centrale de production d'électricité suivant la revendication 1,

caractérisée en ce que,

le monoxyde de carbone dissocié dans l'installation de fractionnement des gaz à très basse température peut être envoyé directement à l'installation de traitement des gaz (20, 21), par un conduit distinct (37).